# EUROPEAN PATENT APPLICATION

(11) **EP 4 697 261 A1**
(43) Date of publication of application: **18.02.2026**
(21) Application number: 25184852.9
(22) Date of filing: 24.06.2025
(51) Int. Cl.: G06T 5/70

(54) **ADJUSTING VIDEO NOISE REDUCTION USING AN AI-BASED NOISE METRIC**

(30) Priority: 14.08.2024 US 202418805231
(71) Applicant: Roku, Inc., San Jose, CA 95110 (US)
(72) Inventor: BELLERS, Erwin Ben, San Jose, 95110 (US); CHECKER, Juhi, San Jose, 95110 (US)
(74) Representative: Mewburn Ellis LLP

(57) **Abstract**

Disclosed herein are system, apparatus, article of manufacture, method and/or computer program product embodiments, and/or combinations and sub-combinations thereof, for automatically adjusting high-definition video noise reduction using an artificial-intelligence-based noise metric from patch sampling. An example embodiment operates by sampling contiguous-pixel portions of a frame of a digital video signal, denoising the sampled patches using artificial-intelligence-based denoising, computing an estimate of noise in the digital video signal based on a comparison of the denoised patches and their respective sampled patches, and denoising the digital video signal by applying an amount of digital noise reduction (DNR) to the digital video signal that is based on the computed noise estimate. The denoising of the digital video signal is thereby performed in real time as the video signal is displayed on a digital video display. The patches can be sampled from random spatial locations within the video frame.

## Description

### BACKGROUND

### FIELD

This disclosure is generally directed to noise reduction in video signals, and more particularly to automatically adjusting high-definition video noise reduction using an artificial-intelligence-based noise metric from patch sampling.

### SUMMARY

Provided herein are system, apparatus, article of manufacture, method and/or computer program product embodiments, and/or combinations and sub-combinations thereof, for automatic, real-time adjustment of an application level of high-definition video noise reduction using an artificial-intelligence-based noise metric from patch sampling of frames of a digital video signal.

An example embodiment operates by sampling contiguous-pixel portions of a frame of a digital video signal, denoising the sampled patches using artificial-intelligence-based denoising, computing an estimate of noise in the digital video signal based on a comparison of the denoised patches and their respective sampled patches, and denoising the digital video signal by applying an amount of digital noise reduction (DNR) to the digital video signal that is based on the computed noise estimate. The denoising of the digital video signal is thereby performed in real time as the video signal is displayed on a digital video display. The patches can, for example, be sampled from random spatial locations within the video frame.

### BRIEF DESCRIPTION OF THE FIGURES

The accompanying drawings are incorporated herein and form a part of the specification.
FIG. 1 is a block diagram illustrating an example multimedia environment, according to some embodiments.
FIG. 2 is block diagram illustrating an example streaming media device, according to some embodiments.
FIG. 3 illustrates spatial diagrams showing example patch sampling of three different example digital video frames that are displayed at different times, according to some embodiments.
FIG. 4 is a flow diagram illustrating an example method of automatic, real-time adjustment of an application level of high-definition video noise reduction using an artificial-intelligence-based noise metric from patch sampling of a frame of a digital video signal, according to some embodiments.
FIG. 5 is a flow diagram illustrating an example method of automatic, real-time adjustment of an application level of high-definition video noise reduction using an artificial-intelligence-based noise metric from patch sampling of frames of a digital video signal, according to some embodiments.
FIG. 6 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for automatically adjusting an application level of digital noise reduction in a digital video signal using a noise metric determined based on artificial intelligence based image noise reduction of one or more patch samples of frames of the digital video signal. The digital video signal can be delivered to an electronic media device, e.g., as a streaming video signal, which may be encoded and compressed prior to transmission over a network to the media device. The artificial intelligence based noise reduction is not performed to denoise the digital video signal for display, but is employed instead to derive the noise metric in the absence of a ground-truth, pre-encoding, pre-compression digital video signal with which to compare the noisy digital video signal.

### Video Noise Sources

A digital video signal can have image noise that can come from any of a variety of different sources or a combination of sources. The noise can be introduced during any of image acquisition, digitization, encoding, or transmission of the digital video signal. As one example, a digital video signal sourced from a video camera can have image noise, e.g., Gaussian noise (including thermal noise and capacitor reset noise) or shot noise, that results from the nature of a video camera sensor used to capture the signal, the amount of light that impinged upon the sensor at the time of capture, and other conditions.

Analogously, a digital video signal sourced from scanning and digitization of photochemical film can have film grain noise and/or noise from a sensor used to perform scanning. Film grain is generally more noticeable in highlights (e.g., brighter regions), whereas video sensor noise is generally more noticeable in shadows (e.g., darker regions). A digital video signal can have quantization noise as a consequence of the way that light levels are encoded as digital signals, which can manifest as banding. A digital video signal that has been encoded for streaming and subsequently decoded after transmission via a network can have compression artifact noise that results from the way in which video data is encoded. Compression artifacts can include, as examples, discrete cosine transform (DCT) blocks and ringing or edge busyness often referred to as mosquito noise. Other common types of video signal noise can include salt-and-pepper (e.g., impulse) noise, anisotropic (e.g., row or column) noise, and periodic noise.

### Digital Noise Reduction Techniques and Functionality in Electronic Video Devices

A digital video display device, such as a digital television, digital projector, or digital monitor for a computing device, or a media device that provides a video signal to a digital video display device, may be equipped with processing circuitry capable of performing digital video signal noise reduction functions. Such circuitry may be implemented, for example, in a system-on-a-chip (SoC) that can provide digital video signal processing capabilities to process video frames using one or more noise reduction techniques. Interframe averaging can remove noise from part or all of a video frame by averaging together all of a frame or portions of a frame over multiple frames.

Temporal median filtering can use median values of pixels over several frames instead of averages, which can help better preserve edges. Low-pass filtering can smooth an image by averaging neighboring pixel values (e.g., using Gaussian or box filters), effectively reducing high-frequency noise. Edge-preserving smoothing filters can include median filters, bilateral filters, guided filters, anisotropic diffusion filters, and Kuwahara filters. Median filtering can replace pixel values with the median value of surrounding pixels to reduce noise while preserving edges. Wavelet transform filtering can decompose a video signal into different frequency components and reduce noise by modifying or thresholding the wavelet coefficients before reconstructing the signal. Deblocking filtering can address sharp edges at the boundaries of DCT blocks of a decoded video frame. 2D and 3D comb filtering are also common techniques.

Digital noise reduction (DNR) functionality in a digital video display device or a connected media device providing a video signal to the digital video display device can use one or a combination of these techniques, or other techniques, to reduce noise in a digital video signal. The noise reduction techniques can be implemented as specialized noise reduction circuitry or as algorithms or routines carried out by a general-purpose computer processor or specialized digital video signal processor.

### Digital Noise Reduction Application Level Control

A digital video display device or connected media device with DNR functionality may permit a user to set a level of DNR application. The number of available noise reduction levels may vary by implementation. In some implementations, there may be only two levels (e.g., noise reduction off and noise reduction on). In some implementations, there may be four levels (e.g., off, low, medium, and high), or five levels, or ten levels. Some implementations may permit for a larger number of levels, e.g., to range from a value from zero to one hundred or more. Parameters in an applied noise reduction algorithm or as implemented by special noise reduction processing circuitry can be adjusted based on the set level of DNR application. In some video devices, such a user-applied setting is then consistently applied to every frame of a video signal. The one or more noise reduction techniques used by the DNR to remove noise in the video signal can be such that video frames can be processed at a rate equal to or greater than the set frame rate of display, e.g., at a rate greater than approximately thirty frames per second, or at a rate greater than approximately sixty frames per second, or at a rate greater than approximately one hundred twenty frames per second, in different examples.

Other digital video display devices or media devices with DNR functionality may not permit any user adjustment to a level of DNR application. In such instances, the video device may be set to a factory setting of, for example, a medium level of DNR, which is applied to all frames irrespective of the amount of noise in the video signal.

At higher DNR application levels, noise may be greatly reduced, but at the expense of reduced image sharpness and/or other undesirable impacts to image quality. The tradeoff between noise reduction and other aspects of picture quality make it desirable that DNR only be applied to the extent necessary, if at all, to address noise in video data as called for by the particular video data being displayed at the time, which can vary from one video signal source to another, from one program or movie to another, from scene to scene within a program or movie, from shot to shot, and indeed from video frame to video frame. On the other hand, too little noise reduction can have an adverse impact on the video signal when other enhancements are applied later in the video signal processing chain. For example, application of sharpening enhancement processing to sharpen edges in the video signal, or shadow enhancement processing to bring out detail in darker regions of the video signal, can work to enhance noise, if it is not first removed from the signal. Upscaling or interpolation enhancements can also be adversely impacted by unremoved noise. It is therefore desirable to be able to remove noise using denoising techniques at levels applied proportionally to the amount of noise present in a video signal. It is further desirable that the applied level of noise reduction be temporally adaptive to the amount of noise in the video signal as that amount of noise varies in time. It is further desirable that the adaptation rate of the DNR application level be made as fast as possible without incurring discernable, distracting fluctuations in picture quality.

An automatic DNR level adjustment can be implemented using a feedback loop given a real-time or near-real-time estimate of the amount of noise in a digital video signal on which to base the DNR application level. However, it is difficult to reliably determine or estimate the amount of noise in a video signal so as to apply an appropriate level of DNR. Accordingly, a technique for noise level estimate described herein can be implemented in a digital video display to provide a metric that can be used as a feedback value to control a level of DNR application in the digital video display. The video noise metric technique described herein thus can allow a digital video display to have an automatic, adaptive adjustment of DNR application that can be updated and applied on a framewise or near-framewise basis and can free a user from having to make repeated adjustments of a DNR application level setting in a television set menu while also providing the user with enhanced video quality and an improved viewing experience.

### Artificial Intelligence Based Image Denoising

Recent advancements in artificial intelligence (AI) technologies, such as generative adversarial networks (GANs) and diffusion models, have provided new approaches to image generation and generative AI-based noise removal in images. For example, a diffusion model can be trained by adding noise to relatively noise-free images, and then providing the noised and noise-free images to a diffusion model as training data. The model training process then, in effect, teaches the diffusion model how to remove to noise from images during inferencing, recovering detail in noisy images provided as inferencing data. Such AI-based noise removal has several drawbacks. First, diffusion-model-based denoising is an imperfect process, in that recovered detail may not match original detail in a pre-noise image, because the recovered detail is generated (in effect imagined) by the AI model as a consequence of its training. Such imperfection may be more noticeable the noisier the image from which the detail is recovered.

Second, AI-based noise removal is, at present, too computationally intensive a process to be useful in real-time video denoising applications for high-definition consumer-level video display systems. Home-based computing systems, and particularly SoCs found in smart televisions and set-top boxes that can provide video signals to digital video display devices, may not, at present, possess the computational power to denoise high-resolution digital video signals using AI-based methods such as diffusion models, at least not at desired resolutions and frame rates, such as 3,840 by 2,160 pixels and thirty or sixty frames per second for consumer 4K displays.

Third, issues with AI video denoising using frame-by-frame denoising processes remain unsolved by present technologies that are addressed to still-frame denoising. Detail recovered for one frame by a diffusion model trained to denoise a single frame may differ from detail recovered for a next frame, so that when a sequence of diffusion model denoised frames are played back in full-motion-video succession, video artifacting may result as a consequence of the frames having been denoised separately. Such video artifacting may be perceived as a kind of noise in itself. This problem and other related problems with AI-based video denoising may be solved with additional research and development.

Accordingly, AI-based video denoising techniques that use diffusion models to recover detail from noisy video frames do not at present lend themselves as viable solutions in high-definition consumer electronics applications. However, AI-based denoising techniques can be used to develop a video noise metric that can be computed within the processing power constrains of consumer electronics devices such as smart digital televisions and set-top boxes. The AI-based video noise metric can be provided as feedback to adjust an application level of a conventional DNR circuit or processing routine. In this way, AI-based denoising can enable automatically adjusting noise reduction for high definition digital video in consumer electronics devices.

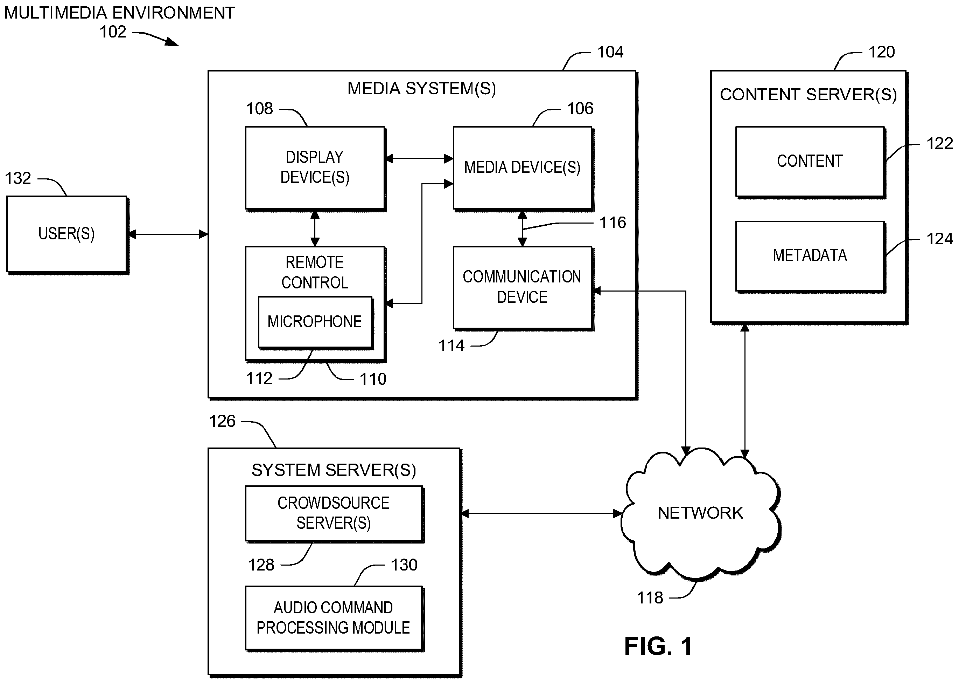

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 can be installed in a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein. In some examples, such as in a smart television, a media device 106 and a display device 108 can be integrated into a single unit. In other examples, the media device 106 can be a separate unit, e.g., a set-top box or plug-in module, that can be wired or wirelessly connected to a display device 108.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as Wi-Fi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smart phone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice, the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system servers 126. The system servers 126 may operate to support the media devices 106 from the cloud. The structural and functional aspects of the system servers 126 may wholly or partially exist in the same or different ones of the system servers 126.

The media devices 106 may exist in thousands or millions of media systems 104. Accordingly, the media devices 106 may lend themselves to crowdsourcing embodiments and, thus, the system servers 126 may include one or more crowdsource servers 128.

For example, using information received from the media devices 106 in the thousands or millions of media systems 104, the crowdsource server(s) 128 may identify similarities and overlaps between closed captioning requests issued by different users 132 watching a particular movie or television program. Based on such information, the crowdsource server(s) 128 may determine that turning closed captioning on may enhance users' viewing experience at particular portions of the movie or television program (for example, when the soundtrack of the movie or television program is difficult to hear), and turning closed captioning off may enhance users' viewing experience at other portions of the movie or television program (for example, when displaying closed captioning obstructs critical visual aspects of the movie or television program). Accordingly, the crowdsource server(s) 128 may operate to cause closed captioning to be automatically turned on and/or off during future streamings of the movie or television program.

As another example, using information received from the media devices 106 in the thousands or millions of media systems 104, the crowdsource server(s) 128 may identify similarities and overlaps between DNR application levels adjusted by different users 132 watching a particular movie or television program. Accordingly, the crowdsource server(s) 128 may operate to cause DNR application levels to be automatically adjusted during future streamings of the movie or television program.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the verbal command of the user 132. The audio command processing module 130 may then forward the verbal command back to the media device 106 for processing.

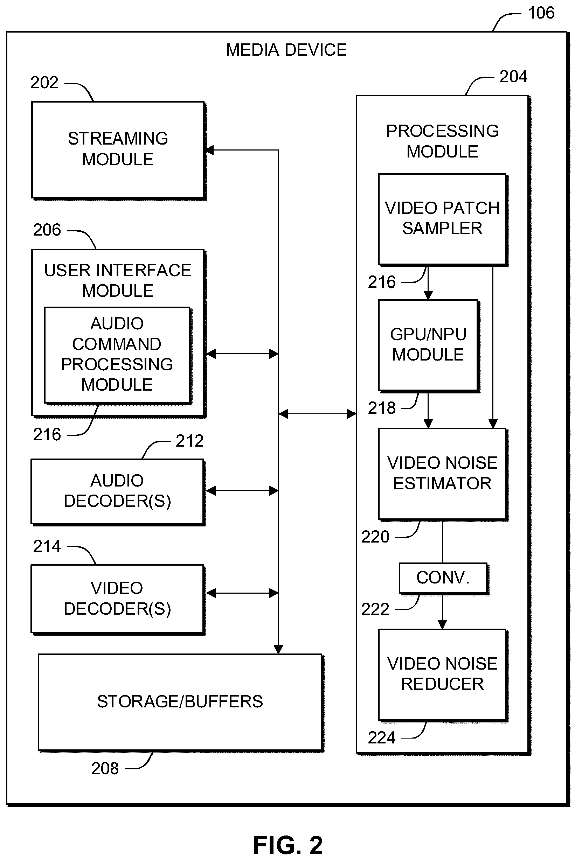

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

The block diagram of FIG. 2 illustrates an example media device 106, according to some embodiments. Media device 106 may include a streaming module 202, processing module 204, storage/buffers 208, and user interface module 206. As described above, the user interface module 206 may include the audio command processing module 216. The processing module 204 can be, for example, a microprocessor or digital signal processor (DSP) having an architecture capable of processing digital data signals and providing outputs. For example, processing module 204 can be configured to process decoded video from the one or more video decoders 214 for transmission to a display device 108 for display. Among other processing functions, processing module 204 can be configured to perform DNR, e.g., using any one or a combination of the techniques described above.

The media device 106 may also include one or more audio decoders 212 and one or more video decoders 214. Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. As one example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132. As another example, the user 132 may use the remote control 110 to interact with the user interface module 206 of the media device 106 to adjust one or more settings of the media device 106 or the display device 108, such as a DNR application level setting used to adjust the aggressiveness of noise reduction applied by DNR circuitry of the display device 108or media device 106.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

Various one or more
modules 202, 204, 206, 208, 212, 214, 216, 218, 220, 222, 224 of media device 106 may be implemented together on an SoC, in some examples. For example, a media device 106 coupled to or integrated with a display device 108 in a consumer electronics device, such as a smart television or a home personal computer, can have an SoC functionally operable or configurable to perform the functions of the media device modules as illustrated and described herein.

### Automatic Video Noise Reduction Level Adjustment Using an AI-Based Metric

Referring to FIG. 2, the processing module 204 of the media device 106 can include a video patch sampler 216, a GPU/NPU module 218, a video noise estimator 220, a converter module 222, and a video noise reducer 224. Modules 216, 218, 220, 222, 224 can be implemented in hardware circuitry configured to perform the respective described functions, as software routines executed by processing module 204 to perform the respective described functions, or as some combination of hardware and software. A video signal decoded by the one or more video decoders 214 can be passed to processing module 204 for automatic noise reduction. The processing module 204 can be configured to intermittently, periodically, or substantially continuously estimate an amount of noise in the decoded video signal and automatically adjust a level of DNR applied to the video signal based on the noise estimate.

As illustrated in FIG. 2, processing module can include or implement a video patch sampler 216 configured to sample one or more patches (regions of contiguous pixels) in a video frame of the decoded video signal, each patch constituting a spatial portion of a video frame that is less than the entire frame. Each patch can be, for example, a square patch of contiguous pixels. In some examples, each patch is fifty pixels by fifty pixels. In some examples, each patch is smaller (e.g., twenty-five pixels by twenty-five pixels) or larger (e.g., one hundred pixels by one hundred pixels). In some examples, all patches taken within a frame can be of the same size, while in other examples, patches sampled from a frame can be of varying sizes. Patch size can, in some examples, be made to vary from frame to frame. The spatial distribution of patch samples can also be made to vary from frame to frame. For example, patch locations can be taken as random locations within a frame. The patch locations can be truly random or constrained random. As one example of constrained random patch location selection, patch locations can be chosen such that for any given frame, no two patches spatially overlap with each other. As another example of constrained random patch selection, patch locations can be chosen such that the density of patch sampling can be enforced to be greater (with patch samples clustered more closely together) or less (with patch samples more broadly spatially distributed throughout a frame.

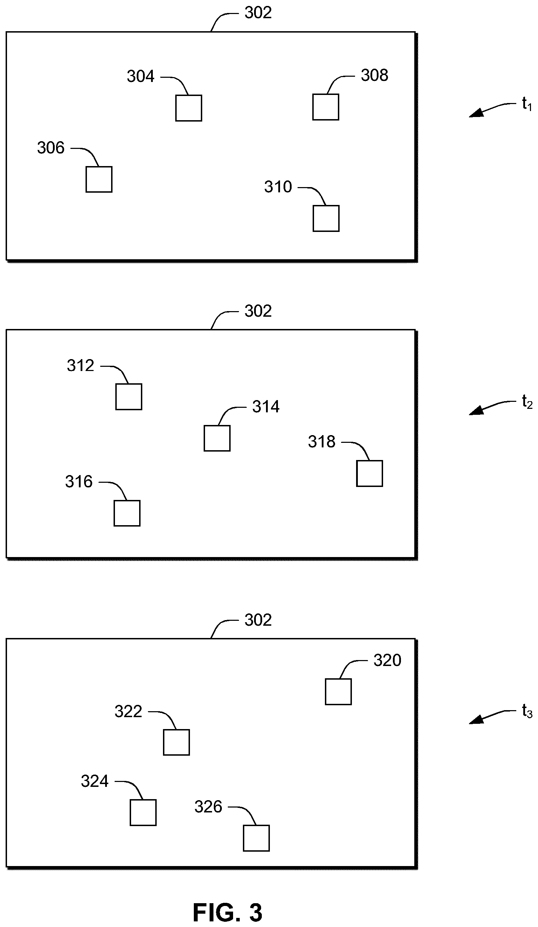

FIG. 3 illustrates patch sampling for three different frames of a digital video signal within a two-dimensional display area 302 of the digital video signal. The full area 302 of the digital video signal is illustrated in FIG. 3 as having a 16:9 (widescreen) aspect ratio common in HDTV sets, but in other examples, the video signal aspect ratio can be different, e.g., 4:3 (fullscreen), 9:16 (vertical), or 21:9 (cinematic widescreen). For a first frame at time t₁, four different patches 304, 306, 308, and 310 are sampled from the first frame at random locations within the video signal area 302. For a second frame at time t₂, another four different patches 312, 314, 316, and 318 are sampled from the second frame at random locations within the video signal area 302. For a third frame at time t₃, another four different patches 320, 322, 324, and 326 are sampled from the third frame at random locations within the video signal area 302. The first, second, and third frames can each be any time within the digital video signal and need not be consecutive frames. The patch sampling can continue for additional frames as long as the video signal is processed for display by processing module 204. Because, in the illustrated example, the sample patches are taken from random locations within each frame, in some examples, there may be some pixel overlap (e.g., total overlap) between a patch in one frame and a patch in another frame, or there may be no overlap between any patches between one frame and the next. Although the example illustrated in FIG. 3 shows the taking of four patch samples per frame, in other examples, more or fewer patch samples may be taken each frame. In some examples, the number of patch samples can differ from frame to frame. In some examples (not illustrated), patch samples are not taken from different spatial locations between frames, but instead are taken from the same one or more spatial locations from one frame to another.

Sampled frames need not be consecutive. In some examples, frames are sampled periodically or randomly. For example, only every second frame, or every third frame, may be sampled, or only one frame each second, or one frame each shot, may be sampled. In general, noise estimation performance benefits from a larger number of larger samples taken more frequently, up to limitations of processing power available to the processing module 204 and processing time available within a control loop. For example, it may not be possible to process patches greater than a certain size, within the processor load constraints of the processing module 204, because the number of processor cycles required to process a patch greater than the certain size would cause an amount of processor utilization that would overwhelm the processing capability of the processing module 204. As another example, it may not be effective to take patch samples every consecutive frame of a video signal where processing of patches on one frame would not be completed within the 1/30th of a second or 1/60th of a second frame display period before patches from a subsequent frame would need to be processed. Accordingly, patch sample size, number of patches sampled per frame, and temporal patch sample frequency are variables that can be manually pre-set or adaptively adjusted in accordance with the availability of free processor cycles, the frame rate, and/or the period of the control loop. There may be other variables that can be similarly pre-set or adjusted, e.g., variables pertaining to the allotment of processing time or cycles to an AI-based noise estimation routine executed for a single patch. The period of the control loop may also be a variable that can be pre-set or dynamically adjustable.

The control loop period is the interval of time between successive executions of a control algorithm. In the context of the present description, the control loop period can be defined as the time between delivery of successive DNR application level values to circuitry or a software routine configured to apply DNR to a digital video signal. The control loop period can depend on the amount of time needed to (a) sample one or more patches, (b) process the sampled one or more patches to produce a noise estimation metric, (c) convert the noise estimation metric to a DNR application level value, which can include rescaling and/or temporal filtering, and (d) deliver the DNR application level value to DNR circuitry or processor carrying out a DNR routine. In some cases, the control loop period can also take into account the time needed to (e) process a frame of video using the DNR circuitry or routine based on the DNR application level value.

In some examples, the patch sample size, number, frequency and/or other variables can each be selected or dynamically adjusted so that the control loop period is less than the full frame period of the video signal, e.g., less than 1/30th of a second, or less than 1/60th of a second. A control loop period less than the full frame period could allow a DNR application level setting to be adjusted on a frame-by-frame basis, with every frame being given a DNR application level customized to that frame. In some instances, frame-by-frame adjustment, or even second-by-second adjustment, of a DNR application level may be undesirable, however, as potentially producing too much interframe or inter-second variability in noise reduction processing that could be perceived by a viewer of the noise-reduction-processed video signal as a flicker- or waver-type side effect. Accordingly, in some examples, a control loop period can be made longer than the full frame period of the video signal, and/or a temporal filtering routine can be implemented to prevent the DNR application level from changing too much from one frame to the next, or from one second to the next.

Having sampled one or more patches from one or more frames of a video signal in accordance with variables set or adjusted as described above, the video patch sampler 216 can provide the sampled patches for noise reduction by a graphics processing unit (GPU) or neural processing unit (NPU) module 218. In some examples, the GPU or NPU module 218 can include specialized electronic circuitry designed to process mathematically intensive applications. For example, the GPU or NPU module 218 can have a parallel structure that is efficient for parallel processing of large blocks of data, such as mathematically intensive data common to computer graphics applications and AI model processing applications. An NPU, for example, can have NPUs hardware units that are designed to efficiently handle matrix multiplication and addition. The GPU or NPU module 218 can be configured to perform AI-based noised reduction on the one or more sampled patches for the one or more frames.

One or more sampled patches may be discarded from processing before being processed (denoised) using the AI-based noise reduction. The discarding may be based on keep/discard criteria. As one example, patches can be dropped from processing in a random or ordered manner based a determined or estimated processor cycle utilization metric of processing module 204 or GPU/NPU module 218. If the processing module 204 or the GPU/NPU module 218 is too busy to process one or more of the sampled patches, they can be discarded from being processed. Ordered manners of dropping patches from processing can be based on last-in, first-out (LIFO) or first-in, first-out (FIFO) orderings, as examples. Other keep/discard criteria can be based on one or more rapid, non-AI-based analyses of the content of the patches. Such analysis may reveal that the patches are not good candidate samples for helping to determine the noise estimation. Sampled patches may be dropped based on combinations of different keep/discard criteria. For example, patches may be first ordered in a triage, based on a first keep/discard criterion or combination of keep/discard criteria, and then, as many patches as possible can be processed with AI-based noise reduction, in the order triaged, until saturated processor utilization prevents further AI-based noise reduction processing on the patches or until the temporal length of the control loop expires.

The AI-based noise reduction can be implemented in some examples by using a diffusion model as described above. The diffusion model can reduce noise in each of the sampled patches (or in each of the selected one or more of the sampled patches). In some examples, the AI-based noise reduction can be implemented using a discrete wavelet denoising convolutional neural network known as WDnCNN, as first described in Rui Zhao et al., Enhancement of a CNN-based denoiser based on spatial and spectral analysis, 2019 IEEE INT'L CONF. ON IMAGE PROCESS. (ICIP) 1124-1128 (2019). Rather than denoising in the spatial domain, WDnCNN uses a spectral analysis approach to remove noise in the frequency spectra. WDnCNN can use a band normalization module (BNM) to normalize coefficients from different parts of the frequency spectrum and/or a band discriminative training (BDT) criterion to enhance model regression. In other examples, the AI-based noise reduction can be implemented using a "fast and flexible" denoising convolutional neural network known as FFDNet, as first described in Kai Zhang et al., FFDNet: Toward a Fast and Flexible Solution for CNN based Image Denoising, 27 IEEE TRANS. IMAGE PROCESS. 4608-4622 (2018), or using a feed-forward denoising convolutional neural network method known as DnCNN, as first described in Kai Zhang et al., Beyond a Gaussian Denoiser: Residual Learning of Deep CNN for Image Denoising, 26 IEEE TRANS. IMAGE PROCESS. 3142-3155 (2017). FFDNet and DnCNN each train a denoiser in the spatial domain, learning an underlying deep image prior from noisy and noise-free image pairs. In still other examples, the AI-based noise reduction can be implemented using a block-matching and three-dimensional filtering method known as BM3D or C-BM3D, as first described in Kostadin Dabov et al., Image denoising by sparse 3D transform-domain collaborative filtering, 16 IEEE TRANS. IMAGE PROCESS. 2080-2095 (2007). BM3D and its color version C-BM3D are model-based denoisers. In yet examples, other AI-based denoising methods, or combinations of methods, can be used.

A video noise estimator 220 can be provided with one or more patches as originally sampled by the video patch sampler 216 and as noise-reduced by the GPU or NPU module 218. The video noise estimator 220 can be configured to analyze and compare the one or more patches as noise-reduced by the GPU/AI module 218 with their original counterparts, using a statistical method to determine a metric estimating the amount of noise in the patches as originally sampled. The noise in the patches as originally sampled can be assumed to correspond to the amount of noise in the video signal frames from which the patches were sampled. As one example, the video noise estimator 220 can subtract an AI-denoised patch from its originally sampled (noisy) counterpart patch to derive a corresponding noise patch, and then compute a noise estimate based on the noise patch using a statistical method. The video noise estimator 220 can use any of a variety of statistical methods or combinations thereof to compute the noise estimate metric and thereby estimate noise in a video frame. Suitable statistical methods include standard deviation, signal-to-noise ratio (SNR), and peak signal-to-noise ratio (PSNR). The statistically derived noise metric can be computed for a plurality of patches in a video frame, resulting in a plurality of noise metrics for a given frame, in instances where more than one patch per frame is sampled and processed in the manner described above. Statistical methods can further be used to combine the plurality of noise metrics for the given frame, that is, to compute a single output noise metric of the video noise estimator based on the plurality of noise metrics. For example, the output noise metric for a video frame can be computed as an average or median of the plurality of noise metrics computed for individual patches in the video frame. As another example, a distribution of the plurality of noise metrics computed for individual patches in the video frame can be examined to determine if the distribution contains one or more outliers. The one or more outliers can be discarded before computing the output noise metric as an average or median of the remaining undiscarded noise metrics. As other examples, weighted average, principle component analysis, factor analysis, cluster analysis, composite index, Z-score, data envelopment analysis, Bayesian, geometric mean, or harmonic mean methods can be used to compute the single output noise metric for a video frame based on computed noise metrics for a plurality of patches in the video frame.

In some examples, the video noise estimate produced by video noise estimator 220 can be converted to a DNR application level value by converter module 222. For example, converter 222 can rescale or normalize the video noise estimate produced by video noise estimator 220 to a suitable DNR application level value appropriate for input into video noise reducer 224. The rescaling or normalization can be according to a linear scale, a log scale, or a non-linear scale, e.g., in accordance with a look-up table. The DNR application level value can change with time, e.g., from frame to frame or second to second. The DNR application level value viewed as a function of time is referred to herein as a DNR application level control signal. In some examples, the DNR application level control signal is temporally filtered (e.g., by converter module 222) to adjust (e.g., reduce) the temporal rate of change of the DNR application level control signal. The DNR application level control signal can thus be prevented from changing to quickly in a way that would result in distracting fluctuations in the amount of noise reduction applied to frames of the digital video signal. For example, large interframe or intersecond changes in DNR application level can be perceptible as flicker or waver in the displayed video. To avoid undesirable side effects of rapid changes in DNR application level, therefore, a low-pass temporal filter can be applied to the DNR application level control signal before the DNR application level control signal is used to control DNR in the digital video signal.

The noise metric output from the video noise estimator, or a control signal based thereon (e.g., as provided by converter module 222), can be provided to video noise reducer 224. For example, a DNR application level value determined by converter module 222 can be provided as a DNR application level control signal to the video noise reducer 224. Video noise reducer 224 can be configured to reduce noise in a digital video signal, e.g., by applying a DNR technique to the digital video signal, based on the provided control signal, in a way that that operates continuously on frames of the digital video signal in real time. By "real time," it is meant that frames are processed to reduce noise at least at the rate that they are displayed, e.g., 30 hertz, 60 hertz, or 120 hertz. The DNR application level control signal can control the DNR application level in the same way that a user might be able to adjust the DNR application using a settings menu associated with the media device 106, except that the DNR application level is controlled automatically and in real time.

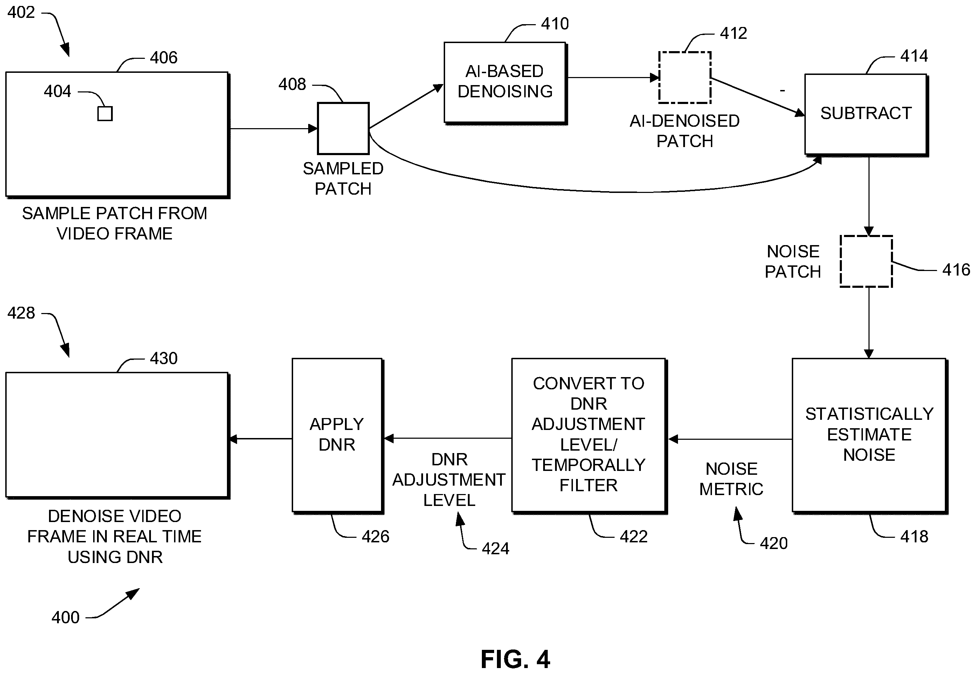

FIG. 4 is a flow diagram of an example computer-implemented method 400 for automatically adjusting high-definition video noise reduction, according to an embodiment. Method 400 can be performed by processing logic that can comprise hardware (e.g., circuitry, dedicated logic, programmable logic, microcode, etc.), software (e.g., instructions executing on a processing device), or a combination thereof. Not all steps of example method 400 may be needed to perform the disclosure provided herein. Further, some of the steps may be performed simultaneously, or in a different order than shown in FIG. 4. Method 400 is described with reference to FIG. 2. However, method 400 is not limited to the example embodiment of FIG. 2.

Video patch sampler 216, which can be implemented using at least one computer processor, samples 402 a contiguous-pixel portion 404 of a frame 406 of a digital video signal, thereby providing a sampled patch 408. The sampled patch 408 can be smaller than the full resolution of the frame 406. In some examples, the sampled patch 408 is a fifty pixel by fifty pixel patch. A GPU or NPU module 218 can then denoise 410 the sampled patch 408 using AI-based denoising, thereby providing a denoised patch 412. In some examples, the GPU or NPU module 218 is implemented as part of an SoC. In some examples, the AI-based denoising is performed using a diffusion model or a WDnCNN, FFDNet, DnCNN, BM3D, or C-BM3D method. Video noise estimator 220, which can be implemented using at least one computer processor, can then subtract the AI-denoised patch 412 from the sampled patch 408, thereby providing a noise patch 416. Video noise estimator 220 can then statistically estimate 418 noise in the digital video signal, thereby producing a noise metric 420 that is based on a comparison of the denoised patch 412 and the sampled patch 408. As examples, video noise estimator 220 can use such statistical methods as standard deviation, SNR, or PSNR to estimate 418 the noise and thereby to compute the noise metric 420.

Converter 222, which can be implemented using at least one computer processor, can convert 422 the noise metric 420 to a DNR adjustment level 424, e.g., by scaling and/or normalizing the noise metric 420, e.g., to meet the expected adjustment level input parameters of DNR circuitry or a DNR software routine. Video noise reducer 222, which can be implemented using at least one computer processor, can then apply 426 DNR in an amount according to the provided DNR adjustment level 424, thereby denoising 428 the digital video signal and providing a denoised video frame 430. In effect, then, video noise reducer 222 applies an amount of DNR to the digital video signal that is based on the computed noise estimate represented by noise metric 420. The frame 430 that is denoised 428 is not necessarily the same frame of the digital video signal as the frame 406 from which the patch 408 was sampled 402. In some examples, the denoised frame 430 is a frame that is later in time in the digital video signal than the sampled frame 406. In some examples, in which method 400 employs a look-ahead sampling process, the denoised frame 430 is a frame that is earlier in time in the digital video signal than the sampled frame 406. The frame denoising 428 can be applied repeatedly to successive frames in the digital video signal, in real time, and the denoised video signal can be displayed on a digital video display. Method 400 is illustrated as sampling 402 only a single region 404 from frame 406, but in some examples, multiple patches are sampled from the same frame 406, e.g., from random or constrained-random locations within the frame, noise estimates are derived using an AI-based denoising method for each sampled patch, and these noise estimates are statistically combined to arrive at noise metric 420. In some examples, noise estimates from sampled patches from different frames (e.g., from multiple temporally contingous frames) are statistically combined to arrive at noise metric 420.

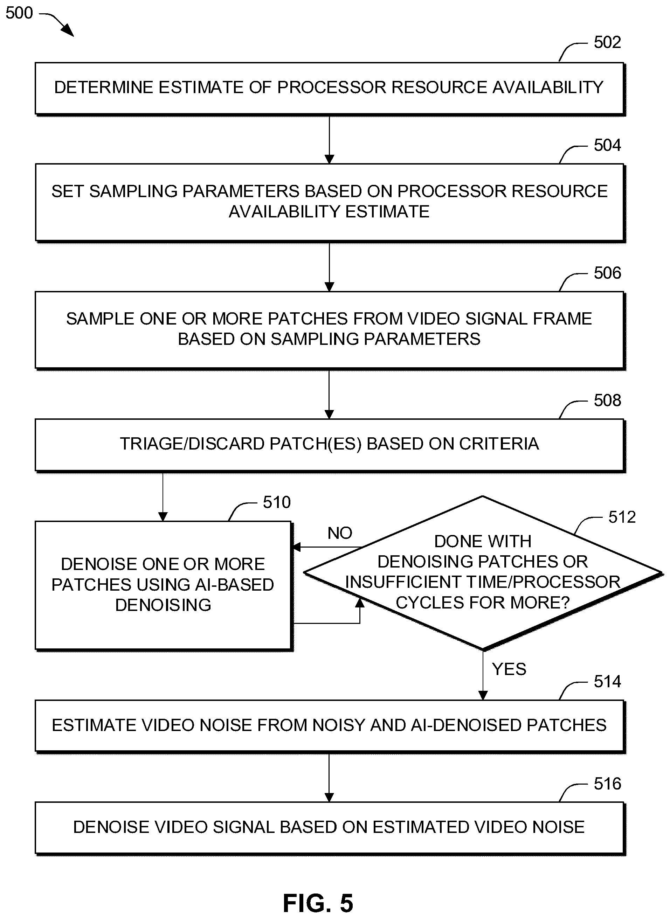

FIG. 5 is a flow diagram of an example method 500 for automatically adjusting video signal noise reduction, according to an embodiment. Method 500 can be performed by processing logic that can comprise hardware (e.g., circuitry, dedicated logic, programmable logic, microcode, etc.), software (e.g., instructions executing on a processing device), or a combination thereof. The hardware and/or software can be implemented in media device 106 of FIGS. 1 and 2, for example. Not all steps of example method 500 may be needed to perform the disclosure provided herein. Further, some of the steps may be performed simultaneously, or in a different order than shown in FIG. 5. Method 500 is described with reference to FIG. 2. However, method 500 is not limited to the example embodiment of FIG. 2.

In method 500, processing module 204 of media device 106 determines 502 an estimate of processor resource availability. The processor resource availability estimate can factor in the utilization of one or more of a central processing unit (CPU), a GPU, a DSP, a GPU, an NPU, or any other processing circuitry in the media device 106 involved in performing method 500. For example, a CPU, DSP, GPU, and/or NPU may be configured to report its present utilization (either regularly or when queries), and the processor resource availability estimate can be computed based on the one or more such reported utilization values. The processor resource availability estimate can be an estimate of present availability or a prediction of future processor resource availability based on the present utilization values. As examples, linear or polynomial (e.g., quadratic) extrapolation can be used to predict future processor resource availability based on sampled utilization values. Machine-learning-based methods can also be used to predict future processor resource availability based on sampled utilization values.

The processing module 204 of the media device 106 can then adaptively set 504 one or more sampling parameters dynamically based on the processor resource availability estimate. The one or more sampling parameters can include patch sample size (e.g., in horizontal and vertical pixels, less than the full frame resolution), number of patches sampled per frame, and temporal patch sample frequency (e.g., how many frames per second patch sampling occurs). In some examples, the processing module 204 can also adjust the period of the control loop, defining how often an updated DNR application level value is delivered to DNR circuitry or a DNR routine, based on the processor resource availability estimate. In some example methods for automatically adjusting video signal noise reduction, the sampling parameters are not dynamically and adaptively set by the processing module 204, but instead are tuned and pre-set in accordance with profiling. In some example methods for automatically adjusting video signal noise reduction, the processing module 204 can dynamically set the sampling parameters based on a metric other than processor resource availability, e.g., based on a metric associated with the content of the video signal.

The video patch sampler 216 can sample 506 one or more patches from a video signal frame based on the sampling parameters. In some examples, the video patch sampler 216 samples 506 the patches from random spatial locations in a frame, as shown in FIG. 3. Patch size, number of patches, and spatial distribution of patches can, in some examples, vary from frame to frame in accordance with the sampling parameters. The temporal frequency of patch sampling 506 can also vary based on the sampling parameters, e.g., not every frame of the digital video signal need be patch sampled. The spatial distribution of patch samples can also be made to vary from frame to frame. For example, patch locations can be taken as random or constrained random locations within a frame.

In some examples, after sampling 506, the processing module 204 can test the sampled patches for statistical criteria and, based on the statistical criteria, the processing module 204 can rank (triage) 508 the patches in processing priority before the GPU or NPU module 218 proceeds with processor-intensive AI-based denoising 510 of the patches. In some examples, after sampling 506, the processing module 204 can test the sampled patches for statistical criteria and, based on the statistical criteria, the processing module 204 may discard 508 one or more of the sampled patches before the GPU or NPU module 218 proceeds with processor-intensive AI-based denoising 510 of the patches.

The GPU or NPU module 218 can then denoise 510 the undiscarded one or more patches using AI-based denoising as described above. As examples, the AI-based denoising 510 can be implemented using a diffusion model, a WDnCNN method, an FFDNet method, a DnCNN method, or a BM3D or C-BM3D method. The AI-based denoising 510 may be processor-intensive and may saturate available processor cycles of a CPU, GPU, or NPU during the time allotted for AI-based denoising in the control loop period. Accordingly, the processing module 204 may periodically check whether processor resource utilization is saturated, which would prevent additional patch denoising 510 within the allotted time. Based on the processing module 204 determining 512 that no further patches can be denoised 510 using AI-based denoising within the time allotted for AI-based denoising of patches within the control loop period, the AI based denoising of patches can be terminated. Otherwise, further based on there still being more sample patches to process, the GPU or NPU module 218 can return to denoising 510. In other example methods, rather than all patches being sampled 506 prior to denoising 510 them, patches are sampled one-by-one (or in small batches) based on processor availability and/or time remaining in the control loop. For example, one patch is sampled and denoised (or a small batch of N patches is sampled and denoised), and then when the denoising is complete, another patch is sampled and denoised (or another small batch of N patches is sampled and denoised), and so on, until the allotted time for patch sampling and denoising in the control loop period expires.

After all undiscarded sample patches are denoised 510 or the denoising otherwise terminates, video noise estimator 220 can estimate 514 an amount of noise in the digital video signal. The video noise estimator 220 can compute the estimate, for example, by subtracting a denoised patch from a sampled patch to compute a difference patch, and processing the difference patch using a statistical method to determine a noise estimate metric for that patch. Example statistical methods include standard deviation, SNR, and PSNR. Where multiple patches are sampled, the video noise estimator 220 can can repeat (or perform in parallel) this process for the multiple patches, and a video noise estimate can be computed by statistically combining the resultant multiple noise estimate metrics for the corresponding sampled patches. The statistical combination can be performed using as examples, average, median, weighted average, principle component analysis, factor analysis, cluster analysis, composite index, Z-score, data envelopment analysis, Bayesian, geometric mean, or harmonic mean methods. In some examples, salient outlier patch noise metrics can be discarded from the statistical combination.

Video noise reducer 224 can then denoise 516 the digital video signal based on the estimated video noise. For example, the video noise reducer 224 can perform the denoising 516 using one or more DNR methods as described above. For example, video noise reducer 225 can denoise 516 the entirety of the video signal (not just patches) using the DNR method, applying the DNR to every frame, unless or until the DNR application level is reduced to zero (off) by based on the estimated video noise. In some examples, converter 222 can rescale or normalize the video noise estimate, and/or temporally filter the video noise estimate, before providing the video noise estimate to a the video noise reducer 224 to denoise 516 the video signal.

Method 500 can take advantage of parallel processing as may be provided by computer processing hardware in processing module 204. As one example, patches within a frame, or from different frames, can be sampled and/or denoised in parallel, such that it is not required to finish denoising one patch before starting denoising on a different patch. Different frames can be processed in parallel, such that computing 514 an estimate of noise in one frame in a video signal can commence before finishing computing 514 an estimate of noise in an earlier (or later) frame of the video signal. Thus, method 500 does not require that frames, or patches within frames, be processed strictly sequentially.

### Example Computer System

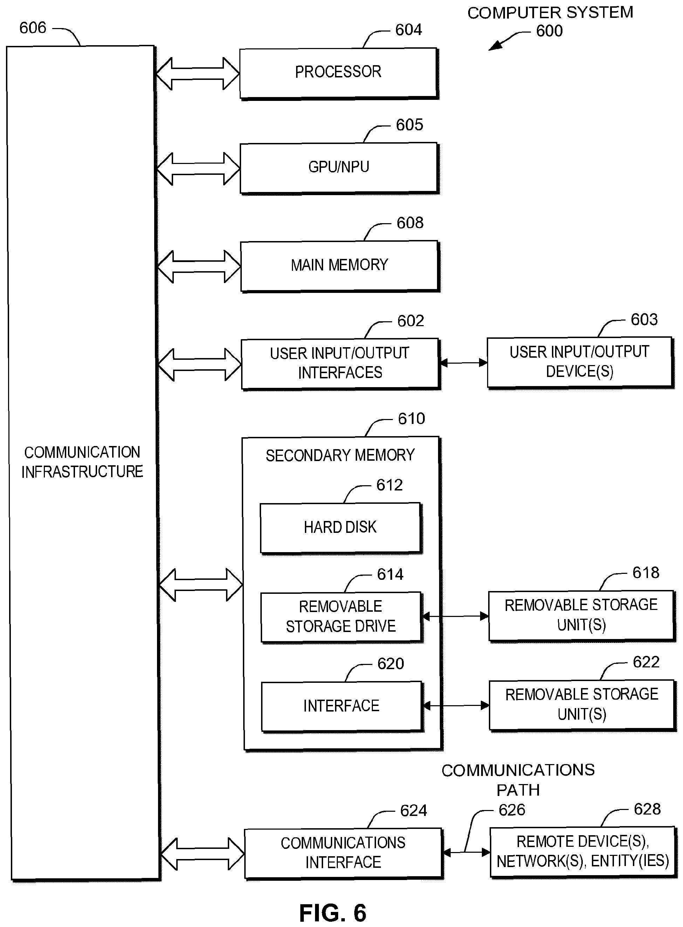

Various embodiments may be implemented, for example, using one or more well-known computer systems, such as computer system 600 shown in FIG. 6. For example, the media device 106 in FIGS. 1 and 2, or the processing module 204 thereof, may be implemented using combinations or sub-combinations of computer system 600. Also or alternatively, one or more computer systems 600 may be used, for example, to implement any of the embodiments discussed herein, as well as combinations and sub-combinations thereof. In some examples, portions of computer system 600 can be implemented as an SoC, fabricated, for example, on a single semiconductor die, or several semiconductor dies integrated together in a semiconductor device package. For example, an SoC can incorporate a processor 604, a communication infrastructure 606, a GPU and/or NPU 605, memory 608, an input/output interface 602, a memory interface 620, and a communications interface 624.

Computer system 600 may include one or more processors (also called central processing units, or CPUs), such as a processor 604. The computer system 600 can also include one or more GPUs and/or NPUs 605. In an embodiment, a GPU or an NPU may be a processor that is a specialized electronic circuit designed to process mathematically intensive applications. The GPU or NPU may have a parallel structure that is efficient for parallel processing of large blocks of data, such as mathematically intensive data common to computer graphics applications, images, videos, AI models, etc. Both GPUs and NPUs can be used to process AI data, such as inferencing using AI models, faster than a CPU alone. Processor 604 and/or GPU/NPU 605 may be connected to a communication infrastructure or bus 606.

Computer system 600 may also include user input/output device(s) 603, such as monitors, keyboards, pointing devices, etc., which may communicate with communication infrastructure 606 through user input/output interface(s) 602.

Computer system 600 may also include a main or primary memory 608, such as random access memory (RAM). Main memory 608 may include one or more levels of cache. Main memory 608 may have stored therein control logic (i.e., computer software) and/or data.

Computer system 600 may also include one or more secondary storage devices or memory 610. Secondary memory 610 may include, for example, a hard disk drive 612 and/or a removable storage device or drive 614. Removable storage drive 614 may be a floppy disk drive, a magnetic tape drive, a compact disk drive, an optical storage device, tape backup device, and/or any other storage device/drive.

Removable storage drive 614 may interact with a removable storage unit 618. Removable storage unit 618 may include a computer usable or readable storage device having stored thereon computer software (control logic) and/or data. Removable storage unit 618 may be a floppy disk, magnetic tape, compact disk, DVD, optical storage disk, and/ any other computer data storage device. Removable storage drive 614 may read from and/or write to removable storage unit 618.

Secondary memory 610 may include other means, devices, components, instrumentalities or other approaches for allowing computer programs and/or other instructions and/or data to be accessed by computer system 600. Such means, devices, components, instrumentalities or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 600 may further include a communications or network interface 624. Communications interface 624 may enable computer system 600 to communicate and interact with any combination of external devices, external networks, external entities, etc. (individually and collectively referenced by reference number 628). For example, communications interface 624 may allow computer system 600 to communicate with external or remote devices 628 over communications path 626, which may be wired and/or wireless (or a combination thereof), and which may include any combination of LANs, WANs, the internet, etc. Control logic and/or data may be transmitted to and from computer system 600 via communication path 626.

Computer system 600 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 600 may be a client or server, accessing or hosting any applications and/or data through any delivery paradigm, including but not limited to remote or distributed cloud computing solutions; local or on-premises software ("on-premises" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 600 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 600, main memory 608, secondary memory 610, and removable storage units 618 and 622, as well as tangible articles of manufacture embodying any combination of the foregoing. Such control logic, when executed by one or more data processing devices (such as computer system 600 or processor(s) 604), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 6. In particular, embodiments can operate with software, hardware, and/or operating system implementations other than those described herein.

### Conclusion

The Detailed Description section, and not any other section, is intended to be used to interpret the claims. Other sections can set forth one or more but not all example embodiments as contemplated by the inventor(s), and thus, are not intended to limit this disclosure or the appended claims in any way.

While this disclosure describes example embodiments for example fields and applications, the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for automatically adjusting high-definition video noise reduction, the computer-implemented method comprising:
sampling, by at least one computer processor, a contiguous-pixel portion of a frame of a digital video signal, thereby providing a sampled patch, the sampled patch being smaller than the full resolution of the frame;
denoising the sampled patch using artificial-intelligence-based denoising, thereby providing a denoised patch;
computing an estimate of noise in the digital video signal based on a comparison of the denoised patch and the sampled patch;
denoising the digital video signal by applying an amount of digital noise reduction (DNR) to the digital video signal that is based on the computed noise estimate; and
displaying the denoised video signal on a digital video display, wherein the denoising the digital video signal is performed in real time as the video signal is displayed.

2. The computer-implemented method of claim 1, wherein the artificial-intelligence-based denoising is performed using a neural processing unit (NPU) or a graphics processing unit (GPU) of a system-on-a-chip (SoC).

3. The computer-implemented method of claim 2, wherein the artificial-intelligence-based denoising is performed using a diffusion model or a WDnCNN, FFDNet, DnCNN, BM3D, or C-BM3D method.

4. The computer-implemented method of claim 3, wherein the sampled patch is a fifty pixel by fifty pixel patch.

5. The computer-implemented method of claim 1, wherein the sampled patch is a first sampled patch, the denoised patch is a first denoised patch, and the computer-implemented method further comprises:
sampling a second contiguous-pixel portion of the frame, thereby providing a second sampled patch; and
denoising the second sampled patch using the artificial-intelligence-based denoising thereby providing a second denoised patch,
wherein the estimate of noise in the digital video signal is based on a statistical combination of:
a first-patch noise metric based on the comparison of the first denoised patch and the first sampled patch, and
a second-patch noise metric based on a comparison of the second denoised patch and the second sampled patch.

6. The computer-implemented method of claim 5 further comprising, after the denoising the first sampled patch:
determining sufficient processor cycle availability or sufficient control loop time to perform the denoising of the second sampled patch,
wherein the denoising the second sampled patch is based on the determining sufficient processor cycle availability or sufficient control loop time.

7. The computer-implemented method of claim 5 further comprising:
sampling third and fourth contiguous-pixel portions of the frame, thereby providing third and fourth sampled patches, respectively; and
denoising the third and fourth sampled patches using the artificial-intelligence-based denoising, thereby providing third and fourth denoised patches, respectively,
wherein the estimate of noise in the digital video signal is based on a statistical combination of:
the first-patch noise metric,
the second-patch noise metric,
a third-patch noise metric based on the comparison of the third denoised patch and the third sampled patch, and
a fourth-patch noise metric based on a comparison of the fourth denoised patch and the fourth sampled patch, and
wherein the first, second, third, and fourth sampled patches are sampled at random or constrained-random spatial locations within the frame.

8. A system for automatically adjusting high-definition video noise reduction, the system comprising:
one or more memories; and
at least one processor coupled to at least one of the memories and configured to perform operations comprising:
sampling a contiguous-pixel portion of a frame of a digital video signal, thereby providing a sampled patch, the sampled patch being smaller than the full resolution of the frame;
denoising the sampled patch using artificial-intelligence-based denoising, thereby providing a denoised patch;
computing an estimate of noise in the digital video signal based on a comparison of the denoised patch and the sampled patch;
denoising the digital video signal by applying an amount of digital noise reduction (DNR) to the digital video signal that is based on the computed noise estimate; and
displaying the denoised video signal on a digital video display, wherein the denoising the digital video signal is performed in real time as the video signal is displayed.

9. The system of claim 8, wherein the system further comprises a neural processing unit (NPU) of a system-on-a-chip (SoC) or a graphics processing unit (GPU) of the SoC, and wherein the artificial-intelligence-based denoising is performed using the NPU or the GPU of the SoC.

10. The system of claim 9, wherein the artificial-intelligence-based denoising is performed using a diffusion model or a WDnCNN, FFDNet, DnCNN, BM3D, or C-BM3D method.

11. The system of claim 10, wherein the sampled patch is a fifty pixel by fifty pixel patch.

12. The system of claim 8, wherein the sampled patch is a first sampled patch, the denoised patch is a first denoised patch, and the operations further comprise:
sampling a second contiguous-pixel portion of the frame, thereby providing a second sampled patch; and
denoising the second sampled patch using the artificial-intelligence-based denoising, thereby providing a second denoised patch,
wherein the estimate of noise in the digital video signal is based on a statistical combination of:
a first-patch noise metric based on the comparison of the first denoised patch and the first sampled patch, and
a second-patch noise metric based on a comparison of the second denoised patch and the second sampled patch.

13. The system of claim 12, wherein the operations further comprise, after the denoising the first sampled patch:
determining sufficient processor cycle availability or sufficient control loop time to perform the denoising of the second sampled patch,
wherein the denoising the second sampled patch is based on the determining sufficient processor cycle availability or sufficient control loop time.

14. The system of claim 12, wherein the operations further comprise:
sampling third and fourth contiguous-pixel portions of the frame, thereby providing third and fourth sampled patches, respectively; and
denoising the third and fourth sampled patches using the artificial-intelligence-based denoising, thereby providing third and fourth denoised patches, respectively,
wherein the estimate of noise in the digital video signal is based on a statistical combination of:
the first-patch noise metric,
the second-patch noise metric,
a third-patch noise metric based on the comparison of the third denoised patch and the third sampled patch, and
a fourth-patch noise metric based on a comparison of the fourth denoised patch and the fourth sampled patch, and
wherein the first, second, third, and fourth sampled patches are sampled at random or constrained-random spatial locations within the frame.

15. A non-transitory computer-readable medium having instructions stored thereon that, when executed by at least one computing device, cause the at least one computing device to carry out the method of any of claims 1-7.
